# EUROPEAN PATENT APPLICATION

(11) **EP 4 538 748 A1**
(43) Date of publication of application: **16.04.2025**
(21) Application number: 23203316.7
(22) Date of filing: 12.10.2023
(51) Int. Cl.: G01S 19/30

(54) **SETTING SIGNAL DETECTION THRESHOLDS**

(71) Applicant: u-blox AG, 8800 Thalwil (CH)
(72) Inventor: Hartmeier, Thomas, Thalwil (CH)
(74) Representative: Elkington and Fife LLP

(57) **Abstract**

A method and apparatus are provided for setting a signal detection threshold. The noise level, the number of search bins and the integration time are used to calculate the mean and standard deviation of the maximum bin value. The signal detection threshold can then be set as a predetermined number of standard deviations from the maximum bin value.

## Description

### FIELD OF THE INVENTION

The present invention relates to Navigation Satellite Systems (NSS). These include Global Navigation Satellite Systems (GNSS) and also regional Navigation Satellite Systems. In particular, it relates to a method for setting detection threshold in a signal acquisition process.

### BACKGROUND OF THE INVENTION

Techniques for GNSS positioning are well known in the art. Existing NSS include the Global Positioning System (GPS), Galileo, GLONASS, QZSS and NAVIC and BeiDou Navigation Satellite System (BDS), also referred to herein as simply "BeiDou". Each GNSS comprises a constellation of satellites, also known in the art as "space vehicles" (SVs), which orbit the earth. Typically, each SV transmits a number of satellite signals. These are received by a GNSS receiver whose position it is desired to calculate. The GNSS receiver can make a number of ranging measurements using the signals, to derive information about the distance between the receiver and respective satellites. When a sufficient number of measurements can be made, the receiver's position can then be calculated by multilateration.

Although the NSS space vehicles emit signals at predetermined frequencies the frequency received by an antenna may vary from the emitted frequency due to Doppler shift and/or unknown receiver clock drift. A range of Doppler frequencies must therefore be searched in order to identify a signal. Furthermore, in order to identify a signal, a known code specific to the satellite is used. However, the time delay of the code is not known and therefore a range of code delays must be tried, or compared, to identify the signal. Thus, a range of frequencies over a range of code delays must be searched in order to identify, or acquire, the signal. This generates a 2D search space of correlation values calculated for different combinations of Doppler frequency shift and code delay. A high correlation value for a specific Doppler frequency and code delay combination may indicate a signal.

However, for each frequency shift and code delay combination there is noise and a threshold must be set, over which a signal is deemed identified. If the signal threshold is too high then a signal may be missed. However, if a signal threshold is set too low then there may be too many false positives.

The signal threshold for optimal detection varies with the integration time. Additionally, the threshold varies depending on the size of the search space. A commonly used approach is to maintain look-up tables for the signal thresholds for different sizes of search space and different integration times. However, this requires a huge set of look-up tables to be stored which is very inefficient and occupies large amounts of memory.

### SUMMARY OF THE INVENTION

It would be desirable to acquire signals as efficiently and accurately as possible, and to reduce false positive detection of signals.

According to one aspect, there is provided a signal acquisition method in a navigation satellite system of setting a signal detection threshold for detection of a signal over a range of frequencies and a range of code delays, the range of frequencies and code delays being divided into search bins, each search bin having a frequency and a code delay, the method comprising: determining noise in a plurality of the search bins, determining an integration time t, determining the number of search bins n, calculating the expected noise mean level and the expected standard deviation of the maximum of all noise bins based on the number of search bins and the standard deviation of the noise in the plurality of search bins, calculating the signal detection threshold based on a number of standard deviations from the maximum noise signal and setting the signal detection threshold.

By calculating a signal detection threshold the need for very large look-up tables is obviated. Advantageously, a signal detection threshold based on the specific search space, and the associated expected noise level(s) are calculated. As the expected maximum noise level is calculated specifically for the search space used false positives are minimised and signals are detected more consistently.

By setting the signal detection threshold based on an expected maximum noise value for a search space of the relevant size there is a consistent false positive rate regardless of the size of the search space. If the search space is changed the signal detection threshold can be recalculated to maintain a consistent false positive rate.

The method of the invention is particularly useful in a system in which there is restricted computing power and memory as it reduces the requirement for cumbersome look-up tables.

Optionally, the method further comprises detecting the signal level in each bin; and identifying one or more signals above the signal detection threshold.

The signal level in each bin is compared to the signal detection threshold and, once a signal level above the signal detection threshold is detected it may no longer be necessary to compare the signal level in further bins to the signal detection threshold because the signal has already been identified. This, in turn, saves computational resources in the system.

The frequency of the identified signal may be determined and also the code delay of the identified signal determined. The identified signal can then be tracked using known tracking mechanisms.

Optionally, the pseudo-range of the satellite from which the signal is emitted may be determined. Using a plurality of pseudo-ranges from a plurality of different satellites a position fix may also be determined. This may be generalised as a position, velocity, time "PVT" fix.

Determining noise may optionally comprise correlating the signal in a bin with a predetermined code. The code may be a random code, or may be, for example, all ones or all zeros. Determining noise in a plurality of search bins may comprise determining noise in all the search bins.

The average noise per bin (where c is the code length) is $\sqrt{c} \sqrt{m} σ \sqrt{π / 2}$, the integration time *t* = *m* and the expected noise level of the maximum bin is given by *µ_{Gumbel} = bₙ* + *aₙ.γ* where γ is the Euler-Mascheroni constant, ${b}_{n} = {F}_{{X}_{1}}^{- 1} \left(1-\frac{1}{n}\right)$ and *aₙ* = ${F}_{{X}_{1}}^{- 1} \left(1-\frac{1}{n ⋅ e}\right) - {b}_{n}$ and ${F}_{{X}_{n}} \left(x\right) = {\left(1-{e}^{\frac{- {x}^{2}}{\left(2{cmσ}^{2}\right)}}\right)}^{n}$ and the variance of the maximum noise bin is ${σ}_{Gumbel}^{2} = \frac{{π}^{2}}{6} . ⋅ {a}_{n}^{2}$

Optionally, the method may further comprise setting a second signal detection threshold over a second range of frequencies, different from the first range of frequencies and a second range of code delays, different from the first range of code delays, the method further comprising setting a second number of frequency bins, setting a second number of code delay bins, determining the noise in a plurality of the search bins, determining an integration time t, determining the number of search bins n, calculating the expected mean noise and standard deviation of the maximum of all noise bins based on the number of search bins and the standard deviation of the noise in the plurality of search bins, calculating the signal detection threshold based on a number of standard deviations from the maximum noise signal and setting a second signal detection threshold. The second signal detection threshold may be different from the initial signal detection threshold.

The second signal detection threshold may be set as the same number of standard deviations from the maximum expected noise signal as the initial signal detection threshold was set. Advantageously, this would maintain a constant error rate.

The second range of frequencies may be a smaller range of frequencies and includes the frequency and code delay of the detected signal. Thus, when a signal is initially detected a smaller search area may then be defined and the frequency and code delay of the signal detected with a higher degree of granularity.

Once a second frequency threshold has been set the signal level in each bin may be detected and one or more signals above the signal detection threshold identified. The frequency and code delay of the identified signal may be determined.

According to the invention there is provided a computer program comprising computer program code configured to cause one or more physical computing devices to perform all the steps of the method as claimed in any one of the preceding claims when said computer program is run on said one or more physical computing devices.

According to the invention there is provided a Global Navigation Satellite System, hereinafter GNSS, receiver (100), configured to set a signal detection threshold for detection of a signal, the GNSS receiver comprising a processor configured to carry out the steps as described above.

### BRIEF DESCRIPTION OF THE DRAWINGS

The invention will now be described by way of example with reference to the accompanying drawings, in which:
Fig. 1 is a schematic block diagram of a GNSS receiver according to an example;
Fig. 2 is a receiver structure for parallel acquisition and signal processing;
Fig. 3 is a flowchart illustrating a method of the invention;
Fig. 4 is a flowchart illustrating a noise determination method;
Fig. 5 is a flowchart illustrating an alternative method of the invention.

It should be noted that these figures are diagrammatic and not drawn to scale.

### DETAILED DESCRIPTION

Reference will now be made in detail to embodiments of the invention, examples of which are illustrated in the accompanying drawings. The described embodiments should not be construed as being limited to the descriptions given in this section; the embodiments may have different forms.

The inventor has recognised that it may be advantageous to derive an acquisition threshold based on dimensions of the search space and bins. Thus, for each search space an acquisition threshold is calculated based on, for example, the number of search bins, the integration time and the measured noise value. This obviates the need for large data tables to be stored and accessed each time an acquisition threshold is to be set.

Currently there are four fully operational GNSSs: the United States' Global Positioning System (GPS), Russia's Global Navigation Satellite System (GLONASS), China's BeiDou Navigation Satellite System (BDS) and the European Union's Galileo. A GNSS receiver which can acquire and track two or more GNSSs concurrently is known as a multi-GNSS receiver.

GNSS satellites of these various systems typically transmit GNSS signals in more than one frequency band. By way of example, the frequency bands which are currently available under GPS include the L1, L2 and L5 bands. For the L1 signal band, the signal carrier frequency is generally in the range of 1.559 GHz to 1.610 GHz. For the L2 signal band, the signal carrier frequency is generally in the range of 1.18845 GHz to 1.258 GHz. And, for the L5 signal band, the signal carrier frequency is generally in the range of 1.164 GHz to 1.189 GHz. Additional or different frequency bands may become available in the future for GPS.

Different signal bands have different characteristics. As an example, L1, L2 and L5 within GPS have different chipping rates: L1 has a chipping rate of 1.023MHz, L2 has a chipping rate of 511.5kHz whereas L5 has a faster chipping rate of 10.23MHz. As L5 has a faster chipping rate the peak of the correlation functions become narrower than those of L1 and L2. For example, a correlation peak of L1 corresponds to 293m whereas a correlation peak of L5 corresponds to 29.3m. Due to the narrower correlation functions, it is easier to distinguish between L5 signals transmitted by different paths (for example due to reflections in a multipath environment) than it is to distinguish between L1 or L2 signals transmitted by different paths. Thus, L5 signals are more resistant in multipath environments than L1 signals. As further examples of chipping rates GLO has a chipping rate of 511kHz on L1 and BDS has 2.046MHz for L1.

A GNSS receiver may operate in a single-band mode in which it performs signal processing to determine navigation measurements on signals in only one band, for example, the L1 band only or, as another example, the L5 band only. Alternatively, the GNSS receiver may operate in a dual- or multi-band mode in which it performs signal processing using signals in multiple bands within a particular constellation, for example, L1 and L5 dual-band mode in GPS. As another example, a GNSS receiver may be configured to operate in a multi-band mode in which three or more signal bands are utilized (e.g., L1, L2 and L5). It is generally expected that multi-band processing will achieve more accurate navigation measurements than single-band processing.

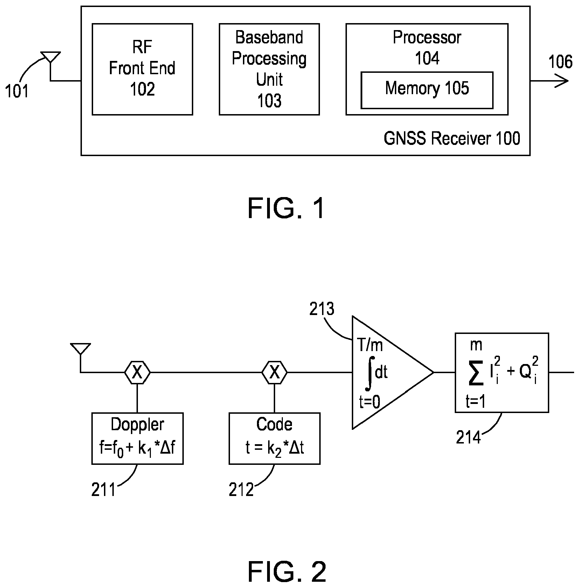

Figure 1 illustrates a block schematic diagram of a GNSS receiver 100 for determining verification of a PVT solution in a global navigation satellite system in accordance with an embodiment of the present invention. As shown in Figure 1, the GNSS receiver 100 is configured to receive GNSS satellite signals from GNSS satellites via an antenna 101. The received signals are passed from the antenna 101 to RF front-end 102 which performs tasks such as amplification, down-conversion, filtering and digitization of the captured satellite signals. The RF front-end 102 may include further functionality such as frequency synthesis (not shown).

The receiver 100 is further configured to process the received signals using a processor 104 to extract observables and navigation data from each channel of the baseband processing unit 103 and to generate a navigation solution 106. The processor 104 may include an internal or external memory 105 for storing and/or retrieving data associated with the processing.

The navigation solution 106 generated by the receiver 100 may include the calculated position and velocity of the receiver 100 as well as a determination of precise GNSS time. The navigation solution may be derived from any one, or multiple ones of, the GNSS frequency band signals received at the antenna 101, which may include GNSS signals from different GNSS constellations. The navigation solution may also take into account discounting of any one or more of the GNSS frequency band signals received at the antenna 101. More particularly, the receiver 100 receives satellite signals from one or more GNSS constellations and the processor 104 processes these signals to provide GNSS measurements such as pseudo-ranges, carrier phases, rates of pseudo-ranges, etc. to a navigation filter. The processor 104 may, for example, implement the filter, e.g. a Kalman filter or a least-squares (LSQ) filter, which is used to determine the navigation solution 106 based on the GNSS measurements.

The system described above is used to determine a navigation solution. However, although the transmission frequency of satellites is known, Doppler shift and also atmospheric effects mean that the frequency at the receiver may be different. The frequency could be higher or lower and the receiver will therefore need to search a range of frequencies in order to find the frequency at the receiver.

Satellites signals include ranging codes and the delay from the start of the code is also not known. A range of code delays must therefore be searched to identify the signal and the correct code delay. Combined, there are a large range of frequencies and different code delays which must be searched. Once a signal has been acquired it can be tracked but it must initially be acquired, or found, involving a relatively large search space.

GNSS signals are heavily attenuated and therefore require acquisition times of, for example, a second or more. A serial search over such a large search area would be unfeasibly slow and therefore modern GNSS systems typically use parallel rather than serial acquisition.

Historically, short ranging codes have been used for signal acquisition and longer ranging codes have been used for tracking. However, some newer signals such as L1C, L2C L5, E1, E5 and E6 just have long ranging codes, often with high bit rates. This results in a greater range of possible code delays with a consequential increase in the size of the search space.

Typically, for signal acquisition there is a matched filterbank for code phase search and a digital Fourier transformer for frequency search. Figure 2 depicts a receiver structure for parallel acquisition and signal processing. The received signal is multiplied with a locally generated replica signal f at 211. This is performed at a plurality of different frequencies, each separated by Δf. The received signal is also multiplied by the respective ranging code at step 212. Similarly to the frequencies, different code delays are used, each separated by Δt. The signal is then integrated coherently 213 and both the complex parts squared 214 and summed. The different frequencies and the code delays define a two dimensional search space, with each bin separated by Δf in the frequency dimension and Δt in the time dimension. The value for each bin is stored in the respective bin.

There will be a value for each bin (each bin having a defined frequency and defined code delay). Most of the bins will simply have noise but some bins may have a higher output value than the other bins, which could indicate a signal at the frequency and code delay of the respective bin. A threshold must be set for the identification of a signal. If the threshold is set too low then there will be too many false positives. On the other hand, if the signal is set too high then the signal will not be identified. It is therefore desirable to deduce the maximum noise level for a set of bins.

Initially the complex signal values are normally distributed according to Iₘ, Qₘ ~N(0, mσ²) where m is the coherent integration time in ms. When these are correlated with a random code the distribution the values are distributed as ~N(0, cmσ²) for a code length c or ~N(0, 1023 mσ²) for a code of length 1023. As is well known, the magnitude of this follows a Rayleigh distribution -Rayleigh ( $\sqrt{c} \sqrt{m} σ$) with a mean of $\sqrt{c} \sqrt{m} σ \sqrt{π / 2}$. Thus, after correlation with a random code a Rayleigh distribution is formed. For L1CA c is 1023 but for other code lengths it would be a different length.

For a Rayleigh distribution the cumulative distribution function is: ${F}_{X} \left(x\right) = P \left[X<x\right] = 1 - {e}^{\frac{- {x}^{2}}{\left(2{cmσ}^{2}\right)}}$

However, there are n bins so it is desirable to obtain the maximum of n bins as accurately distinguishing between a signal bin and the maximum noise bin will result in the correct identification of a signal. The cumulative distribution function of the maximum of all noise bins is obtained by raising the cumulative distribution of F(x) to the power n.

For n different bins Xₙ is given by: $\begin{matrix}{F}_{{X}_{n}} \left(x\right) = Pr \left[{X}_{n}<x\right] \\ = Pr \left[all out of n bins<x\right] \\ = {\left(Pr\left[X<x\right]\right)}^{n} \\ = {\left(1-{e}^{\frac{- {x}^{2}}{\left(2{cmσ}^{2}\right)}}\right)}^{n}\end{matrix}$

With a probability distribution function of ${f}_{{X}_{n}} \left(x\right) = n ⋅ {\left(1-{e}^{\frac{- {x}^{2}}{\left(2{cmσ}^{2}\right)}}\right)}^{n - 1} ⋅ \left(-{e}^{\frac{- {x}^{2}}{\left(2{cmσ}^{2}\right)}}\right) ⋅ \left(-2x/2{cmσ}^{2}\right)$

As can be seen, this has an exponentially decreasing tail. Extreme value theory proves that, when *n* is very large and the distribution has an exponentially decreasing tail, the distribution of the maximum converges towards a Gumbel distribution. ${lim}_{n \to ∞} {F}_{{X}_{n}} = {F}_{{X}_{n}} \left({a}_{n}.x+{b}_{n}\right) \to G \left(x\right) = exp \left(-{e}^{- x}\right)$ where ${b}_{n} = {F}_{{X}_{1}}^{- 1} \left(1-\frac{1}{n}\right)$ And ${a}_{n} = {F}_{{X}_{1}}^{- 1} \left(1-\frac{1}{n ⋅ e}\right) - {b}_{n}$ *aₙ* and *bₙ* are calculated from the original cumulative distribution function *F_{Xn}.* ${F}_{{X}_{1}}^{- 1} \left(x\right) = \pm \sqrt{- 2 ⋅ c ⋅ m ⋅ {σ}^{2} ⋅ ln \left(1-x\right)}$ For an example integration time of 1 this gives: ${F}_{{X}_{1}}^{- 1} \left(x\right) = \pm \sqrt{- 2 ⋅ c ⋅ {σ}^{2} ⋅ ln \left(1-x\right)}$ The mean of a Gumbel function is given by: ${μ}_{Gumbel} = {b}_{n} + {a}_{n} ⋅ γ$ Where γ is the Euler-Mascheroni constant, which is approximately 0.5772. The variance of a Gumbel distribution is given as: ${σ}_{Gumbel}^{2} = \frac{{π}^{2}}{6} ⋅ {a}_{n}^{2}$ The expected value of the maximum noise bin depends on *n,* the number of bins.

Knowing the expected value of the noise distribution and the standard deviation allows a signal detection threshold to be set more accurately. The threshold could be set as, for example, *µ_{Gumbel}* + *σ_{Gumbel}* or *µ_{Gumbel}* + 2*σ_{Gumbel}* or *µ_{Gumbel}* + 3*σ_{Gumbel}.* By setting the signal detection threshold a predetermined number of standard deviations above the expected maximum noise bin false positives are minimised. Furthermore, if the signal detection threshold is consistently set at a predetermined number of standard deviations from the expected maximum noise bin then there would be a consistent error rate, regardless of the size of the search space.

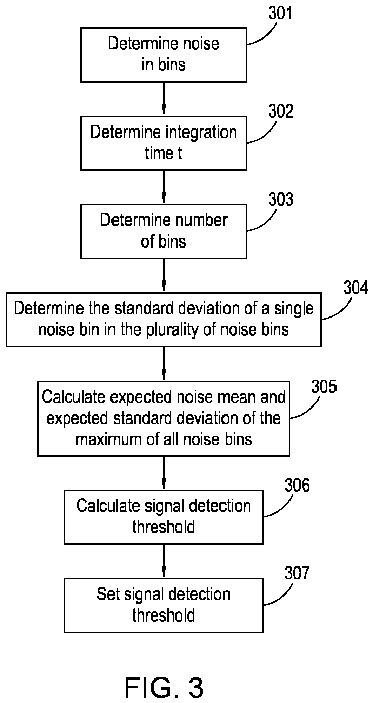

Figure 3 depicts a method according to the invention. In a first step 301 the noise is determined in a plurality of bins. The noise level is preferably determined in all the bins but may alternatively be a subset of the bins. The average noise level per bin is, as described above, given by $\sqrt{c} \sqrt{m} σ \sqrt{π / 2}$ where m is the number of coherent integration times.

At step 302 the integration time t is determined. In the following step 303 the number of bins *n* is determined. The standard deviation σ of a single noise bin is then determined at step 304.

The expected noise mean and expected standard deviation of the maximum noise bin is then calculated at step 305. As described above, the expected noise mean of the maximum noise bin is given by: ${μ}_{Gumbel} = {b}_{n} + {a}_{n} ⋅ γ$

And the expected variance given by: ${σ}_{Gumbel}^{2} = \frac{{π}^{2}}{6} ⋅ {a}_{n}^{2}$ where ${b}_{n} = {F}_{{X}_{1}}^{- 1} \left(1-\frac{1}{n}\right)$ and ${a}_{n} = {F}_{{X}_{1}}^{- 1} \left(1-\frac{1}{n ⋅ e}\right) - {b}_{n}$ With ${F}_{1}^{- 1} \left(x\right) = \pm \sqrt{- 2 ⋅ c ⋅ m ⋅ {σ}^{2} ⋅ ln \left(1-x\right)}$ The signal detection threshold is then calculated at step 306. For signals in which the code length is 1023 c would be 1023. In this example the signal detection threshold is set as *µ_{Gumbel}* + *σ_{Gumbel}.* There the signal detection threshold is set as: $Detection Threshold = {b}_{n} + {a}_{n} ⋅ γ + \frac{π}{\sqrt{6}} ⋅ {a}_{n}$

Finally, the signal detection threshold, calculated in the previous step is set at step 307.

Once the signal detection threshold is set the bins can be processed using the system depicted in Figure 2, namely multiplying by a replica carrier frequency at different frequencies and a replica pseudorandom code at different code delays. The signals in individual bins can then be compared to the detection threshold. Once a signal above the signal detection threshold is found then a signal is identified. If a signal is identified it is not necessary to consider any remaining search bins because, for each pseudorandom code there is only one signal. If the signal has been found then the remaining bins will not include the signal.

When the signal is identified the code delay and the frequency of the signal are determined as the code delay and frequency of the respective bin from which the signal was identified.

Once the signal has been identified a pseudo range can be calculated. Once pseudo ranges from a plurality of different satellites have been calculated the position (or position, velocity and time) fix can be calculated using pseudo ranges from a plurality of satellites.

The method above may use a very large search area i.e. search over a large range of frequencies or a large range of code delays. Although a frequency and code delay have been identified it is only to within Δf and Δt. A second, smaller, search area may therefore subsequently be used. For example, there may be a smaller search area but with each bin having a much smaller Δf and/or Δt.

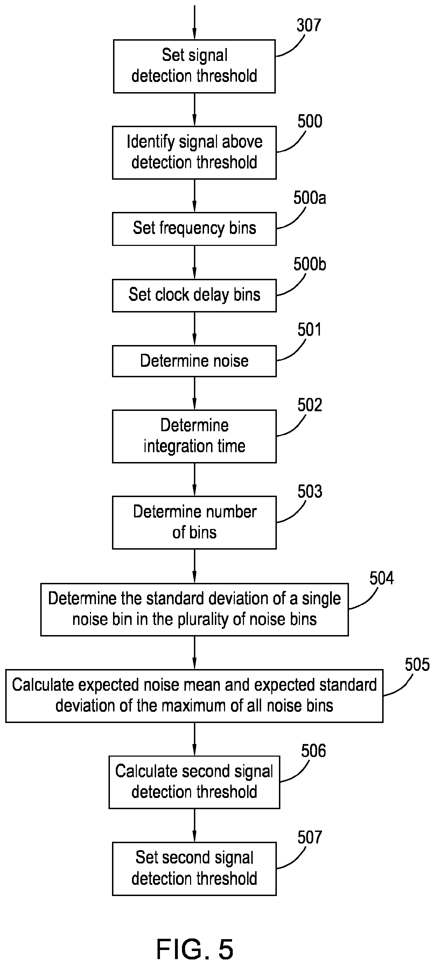

Figure 5 depicts a further method according to the invention. The method of Figure 5 continues from the method of Figure 3. Having set a signal detection threshold at step 307, a signal above the signal threshold is identified at step 500. This signal has a frequency and a code delay. A second search area is then identified by setting 500a a second number of frequency bins and setting 500b a second number of code delay bins. The second search area may be much smaller and centred on the originally identified frequency and code delay. Indeed the entire search area may be within the originally identified search bin. Thus, the frequency range Δf and code delay range Δt of each search bin may be considerably smaller. Consequently, the result would give a greater accuracy of frequency and code delay.

The noise is determined at step 501. The integration time is then determined at step 502 and the number of bins n is determined at step 503. Although the average noise per bin is consistent with the earlier method there may be a different number of bins and therefore the expected maximum noise level may change. At step 504 the standard deviation of a single noise bin in the plurality of noise bins is determined.

Knowing the integration time t and the number of bins *n* the expected noise level and standard deviation of the maximum noise bin is calculated at step 505. Next, a second signal detection threshold is calculated at step 506 and this may be different from the initial signal detection threshold. To maintain a constant error, or false positive rate, this is the same number of standard deviations from the mean as the earlier step 306. For example, if step 306 set as *µ_{Gumbel}* + *σ_{Gumbel}* then the second signal detection threshold is set as *µ_{Gumbel}* + *σ_{Gumbel}* (using the new value of *µ_{Gumbel}*). Finally, a second signal detection threshold is set at step 507.

Using the steps described above a signal can then be acquired in a smaller search area to obtain a more accurate estimate of the frequency and code delay.

Although Figure 5 is described in conjunction with a smaller search area it could equally be used in conjunction with a larger search area. However, for each search area there will be a constant error, or false positive, rate because the signal detection threshold is set as the same number of standard deviations from the expected noise level of the maximum noise bin.

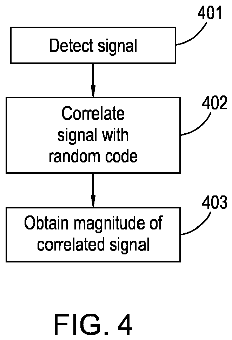

A method for obtaining the noise level per bin is depicted in Fig 4. At a first step 401 a signal is detected. At step 402 the signal is then correlated with a series of ones. Although the example given here is a series of ones any random (but not a designated pseudorandom) code could be used. The magnitude of the correlated signal is then obtained at step 403.

It should be understood that the scope of the present disclosure is not limited to the example described above. Many variations will be apparent to those skilled in the art, based on the foregoing description.

In the claims, any reference signs placed between parentheses shall not be construed as limiting the claim. The word "comprising" does not exclude the presence of elements or steps other than those listed in a claim. However, where the word "comprising" is used, this also discloses as a special case the possibility that the elements or steps listed are exhaustive - that is, the apparatus or method may consist solely of those elements or steps. The word "a" or "an" preceding an element does not exclude the presence of a plurality of such elements. The embodiments may be implemented by means of hardware comprising several distinct elements. In a device claim enumerating several means, several of these means may be embodied by one and the same item of hardware. The mere fact that certain measures are recited in mutually different dependent claims does not indicate that a combination of these measures cannot be used to advantage. Furthermore, in the appended claims lists comprising "at least one of: A; B; and C" should be interpreted as (A and/or B) and/or C.

In flowcharts, summaries, claims, and descriptions relating to methods, the sequence in which steps are listed is not, in general, intended to be limiting on the order in which they are carried out. The steps may be performed in a different order to that indicated (except where specifically indicated, or where a subsequent step relies on the product of a preceding step). Nevertheless, the order in which the steps are described may in some cases reflect a preferred sequence of operations.

Furthermore, in general, the various embodiments may be implemented in hardware or special purpose circuits, software, logic or any combination thereof. For example, some aspects may be implemented in hardware, while other aspects may be implemented in firmware or software, which may be executed by a controller, microprocessor or other computing device, although these are not limiting examples. While various aspects described herein may be illustrated and described as block diagrams, flow charts, or using some other pictorial representation, it is well understood that these blocks, apparatus, systems, techniques or methods described herein may be implemented in, as non-limiting examples, hardware, software, firmware, special purpose circuits or logic, general purpose hardware or controller or other computing devices, or some combination thereof.

The embodiments described herein may be implemented by computer software executable by a data processor of the apparatus, such as in the processor entity, or by hardware, or by a combination of software and hardware. Further in this regard it should be noted that any blocks of the logic flow as in the Figures may represent program steps, or interconnected logic circuits, blocks and functions, or a combination of program steps and logic circuits, blocks and functions. The software may be stored on such physical media as memory chips, or memory blocks implemented within the processor, magnetic media such as hard disk or floppy disks, and optical media such as for example DVD and the data variants thereof, CD.

The memory may be of any type suitable to the local technical environment and may be implemented using any suitable data storage technology, such as semiconductor-based memory devices, magnetic memory devices and systems, optical memory devices and systems, fixed memory and removable memory. The data processors may be of any type suitable to the local technical environment, and may include one or more of general purpose computers, special purpose computers, microprocessors, digital signal processors (DSPs), application specific integrated circuits (ASIC), gate level circuits and processors based on multi-core processor architecture, as non-limiting examples.

Embodiments as discussed herein may be practiced in various components such as integrated circuit modules. The design of integrated circuits is generally a highly automated process. Complex and powerful software tools are available for converting a logic level design into a semiconductor circuit design ready to be etched and formed on a semiconductor substrate.

## Claims

1. A signal acquisition method in a navigation satellite system of setting a signal detection threshold for detection of a signal over a range of frequencies and a range of code delays, the range of frequencies and code delays being divided into search bins, each search bin having a frequency and a code delay, the method comprising:
determining noise in a plurality of the search bins;
determining the standard deviation of a single noise bin in the plurality of noise bins;
determining an integration time t;
determining the number of search bins n;
calculating the expected noise mean and expected standard deviation of the maximum of all noise bins based on the number of search bins and the standard deviation of a single noise bin;
calculating the signal detection threshold based on a number of standard deviations from the expected noise mean of the maximum noise bin; and
setting the signal detection threshold.

2. A method according to claim 1 further comprising:
detecting the signal level in each bin; and
identifying one or more signals above the signal detection threshold.

3. A method according to claim 2 further comprising:
determining the frequency of the identified signal; and
determining the code delay of the identified signal.

4. A method according to claim 3 further comprising determining the pseudo-range of the satellite from which the signal is emitted.

5. A method according to any one of the preceding claims wherein determining noise comprises correlating the signal with a predetermined code.

6. A method according to claim 5 wherein the code comprises either all ones or all zeros.

7. A method according to any one of the preceding claims wherein the average noise per bin is $\sqrt{c} \sqrt{m} σ \sqrt{π / 2}$, the integration time *t* = m and the expected noise level of the maximum bin is given by *µ_{Gumbel}* = *bₙ* + *aₙ.γ* where γ is the Euler-Mascheroni constant, ${b}_{n} = {F}_{{X}_{1}}^{- 1} \left(1-\frac{1}{n}\right)$ and ${a}_{n} = {F}_{{X}_{1}}^{- 1} \left(1-\frac{1}{n ⋅ e}\right) - {b}_{n}$ and ${F}_{{X}_{n}} \left(x\right) = {\left(1-{e}^{\frac{- {x}^{2}}{\left(2{cmσ}^{2}\right)}}\right)}^{n}$ and the variance of the maximum noise bin is ${σ}_{Gumbel}^{2} = \frac{{π}^{2}}{6} ⋅ {a}_{n}^{2}$

8. A method according to any one of claims 3 to 7 further comprising setting a second signal detection threshold over a second range of frequencies, different from the first range of frequencies and a second range of code delays, different from the first range of code delays, the method further comprising:
setting a second number of frequency bins;
setting a second number of code delay bins;
determining the noise in a plurality of the search bins;
determining the standard deviation of a single noise bin in the plurality of noise bins;
determining an integration time t;
determining the number of search bins *n*;
calculating the expected mean and expected standard deviation of the maximum of all noise bins based on the number of search bins and the standard deviation of the noise in the plurality of search bins;
calculating the signal detection threshold based on a number of standard deviations from the maximum noise signal; and
setting a second signal detection threshold.

9. A method according to claim 8 wherein the second range of frequencies is a smaller range of frequencies and includes the frequency of the signal.

10. A method according to either claim 8 or claim 9 wherein the second range of code delays is a smaller range of code delays and includes the code delay of the signal.

11. A method according to any one of claims 7 to 10 further comprising;
detecting the signal level in each bin; and
identifying one or more signals above the signal detection threshold.

12. A method according to claim 11 further comprising:
determining the frequency of the identified signal; and
determining the code delay of the identified signal.

13. A computer program comprising computer program code configured to cause one or more physical computing devices to perform all the steps of the method as claimed in any one of the preceding claims when said computer program is run on said one or more physical computing devices.

14. A Global Navigation Satellite System, hereinafter GNSS, receiver (100), configured to set a signal detection threshold for detection of a signal, the GNSS receiver comprising a processor configured to carry out the steps according to any one of claims 1 to 13.
